# EUROPÄISCHE PATENTSCHRIFT

(11) **EP 1 502 691 B1**
(45) Veröffentlichungstag und Bekanntmachung des Hinweises auf die Patenterteilung: **23.04.2008**
(21) Anmeldenummer: 04103405.9
(22) Anmeldetag: 16.07.2004
(51) Int. Cl.: B23K 1/005, B23K 1/00, B23K 1/14, B23K 1/20, B23K 33/00, B62D 25/00, B62D 27/02, B62D 33/02, B23K 26/24, F16B 5/08

(54) **Lötverbindung mit mehreren überlappenden Blechen und mit einem zwischen einem oberen Deckblech und einem unteren Bodenblech angeordneten Distanzstück**
Soldering joint comprising a plurality of overlapping metal sheets, with a spacer located between an upper metal sheet and a lower metal sheet
Assemblage brasé par recouvrement comprenant une pluralité de tôles avec un espaceur située entre une tôle supérieure et une tôle inférieure

(30) Priorität: 30.07.2003 EP 03102358
(43) Veröffentlichungstag der Anmeldung: 02.02.2005
(73) Patentinhaber: Ford Global Technologies, LLC, Dearborn, MI 48126 (US)
(72) Erfinder: Hover, Jürgen, 53797 Lohmar (DE); Stadtler, Arnold, 50935 Köln (DE); Müller, Guido, 50767 Köln (DE)
(74) Vertreter: Dörfler, Thomas

(56) Entgegenhaltungen:
- EP-A- 0 049 845
- EP-A- 0 552 468
- EP-A- 0 787 557
- US-A- 5 645 364
- PATENT ABSTRACTS OF JAPAN Bd. 009, Nr. 176 (M-398), 20. Juli 1985 (1985-07-20) & JP 60 046864 A (MITSUBISHI ELECTRIC CORP), 13. März 1985 (1985-03-13)
- PATENT ABSTRACTS OF JAPAN Bd. 199, Nr. 912, 29. Oktober 1999 (1999-10-29) & JP 11 192580 A (SUMITOMO ELECTRIC IND LTD), 21. Juli 1999 (1999-07-21)
- PATENT ABSTRACTS OF JAPAN Bd. 2000, Nr. 19, 5. Juni 2001 (2001-06-05) & JP 2001 030067 A (SHOWA ALUM CORP), 6. Februar 2001 (2001-02-06)
- PATENT ABSTRACTS OF JAPAN Bd. 016, Nr. 016 (M-1200), 16. Januar 1992 (1992-01-16) & JP 3 234391 A (NEC CORP), 18. Oktober 1991 (1991-10-18)

## Beschreibung

Die Erfindung betrifft eine Lötverbindung mit mehreren Blechen gemäß dem Oberbegriff des Anspruches 1 (siehe, z.B., JP 60/046864).

Aus der WO 98/21000 ist eine Lötverbindung von mehreren Blechen bekannt, bei der ein oberes Deckblech flach auf einem unteren Bodenblech aufliegt, und das Deckblech einen Rand aufweist, entlang dem die beiden Bleche mittels einer Lötnaht verbunden sind. Zwischen dem Rand des Deckbleches und dem Bodenblech bildet sich beim Löten eine Kehlnaht aus, die der kräftemäßigen Verbindung der beiden Bleche dient. Vor allem bei hochbelasteten Lötverbindungen, oder wenn Beschlag- oder Verstärkungsbleche mittels dieser Lötverbindung auf ein Bodenblech gelötet werden, ist diese Kehlnaht nicht geeignet, alle Kräfte zwischen den Blechen zu übertragen, z. B. Zugkräfte senkrecht zur Blechebene im Bereich der Lötverbindung. Besser geeignet wäre hier eine direkte Verbindung der beiden Bleche über eine Lötnaht.

In der US 5645364 ist eine Lötverbindung für zwei Karosseriebleche beschrieben, bei der ein erstes Blech eine Eindrückung im Bereich der Überlappung der beiden Bleche aufweist. Diese Eindrückung des ersten Bleches erstreckt sich über den Rand des zweiten Bleches, wodurch zwischen den beiden Blechen ein Lötspalt gebildet wird, der vollständig mit Lötmaterial aufgefüllt wird. Diese Lötverbindung dient im wesentlichen dazu, eine verzugsfreie Oberfläche für Sichtflächen der Karosserie herzustellen.

Eine weitere Lötverbindung für zwei Bleche, zwischen denen ein Lötspalt gebildet wird, ist aus der EP 0552468 bekannt. Damit zwei Tankhälften aus Blech mittels Laserlötens verlötetet werden können, ist im Überlappungsbereich ein sich aufweitender Lötspalt vorgesehen, der auf aufgeweiteten Ende mit Lötmaterial gefüllt wird, welches im geschmolzenen Zustand in den Lötspalt am nicht aufgeweiteten Ende fließt und damit eine zuverlässige Lötverbindung bei einer Laserlötung schafft.

Die Lötspalte werden hier im wesentlichen durch Eindrückungen in den Blechen erzeugt. Erfahrungsgemäß sind solche Eindrückungen jedoch nicht immer genau reproduzierbar, so daß die Abmessungen des Lötspaltes abhängig von der aktuellen Form der Eindrückungen ist. Dies bedeutet, die Toleranzen aus dem Fertigungs- bzw. Umformverfahren der Eindrückungen bestimmen die möglichen Abmessungen des Lötspaltes. Die Lötspaltabmessungen sind aber relevant für eine gleichmäßige und belastbare Lötnaht.

Aus der JP 60/046864 ist eine Lötverbindung von zwei Bauteilen bekannt, bei der zwischen den beiden Bauteilen ein Lötspalt geringer Dicke erzeugt wird und der Lötspalt zumindest teilweise mit Lötmaterial aufgefüllt ist. Während des Lötvorgangs werden Distanzstücke zwischen die beiden Bauteile eingefügt, wodurch sich die Dicke des Lötspaltes erhöht und zusätzliches Lötmaterial in die nicht von Lötmaterial benetzten Bereiche des Lötspaltes von außen in den Lötspalt einfließen. Damit werden die Bereiche von Lufteinschlüssen im Lötspalt reduziert und die Festigkeit der Lötverbindung erhöht. Eine solche Lötverbindung ist aber insbesondere bei der Lötung von Blechen schwierig zu handhaben, da über einen weiten Bereich Distanzstücke zwischen die Bleche während des Lötens eingefügt werden müssen.

Aus der JP 11/192580 ist eine Lötverbindung von zwei Blechen bekannt, bei der ein erstes Blech Ausschnitte und ein zweites Blech Eindrückungen aufweist. Die Ausschnitte und Eindrückungen wirken so zusammen, daß die beiden Bleche während des Lötvorganges zueinander positioniert werden und so ein gegenseitiges Verschieben der Bleche verhindert wird. Weiterhin wird damit die Dicke des Lötspaltes definiert. Da, wie bereits oben gesagt, Eindrückungen nicht immer genau reproduzierbar sind, sind auch hier die Abmessungen des Lötspaltes abhängig von der aktuellen Form der Eindrückungen und damit nicht eindeutig und genau herstellbar.

Die JP 2001/030067 zeigt die Lötverbindung zwischen zwei Gussteilen an extra ausgebildeten Lötflanschen. Das Lötmaterial wird in Form eines Streifens wie eine Dichtung zwischen die Teile gelegt, die Teile selbst werden mittels Distanzstücke zueinander positioniert. Die Distanzstücke bestehen aus einem Bolzen mit einem Mittelflansch. Der Bolzen hält die beiden Teile während des Lötvorganges unverrückbar in Position, während der Mittelflansch, der etwas dünner als der Lötmaterialstreifen ist, die Dicke des Lötspaltes festlegt, wenn das Lötmaterial beim Löten flüssig geworden ist. Eine solche Lötverbindung bedeutet bei der Verbindung mehrerer Bleche einen relativ hohen Fertigungsaufwand, da insgesamt mehrere Distanzstücke benötigt werden und die Bleche jeweils an den Stellen für die Distanzstücke auf beiden Seiten gelocht sein müssen.

Aufgabe der Erfindung ist es deshalb, eine Lötverbindung so zu gestalten, daß diese zuverlässig eine hohe Festigkeit aufweist, indem ein gleichmäßiger Lötspalt erzeugt werden kann.

Gelöst wird diese Aufgabe mit den Merkmalen des Anspruches 1.

Erfindungsgemäß wird der Lötspalt gebildet, indem ein Distanzstück zwischen Deckblech und Bodenblech angeordnet ist, wobei der Rand des Distanzstückes gegenüber dem Rand des Deckbleches zurückgesetzt ist. Dadurch entsteht ein Lötspalt, der genau definierte Abmessungen aufweist und damit eine Lötverbindung ermöglicht, die besser reproduzierbare Festigkeitswerte aufweist als aus dem Stand der Technik bekannt. Während des Lötvorganges fließt das Lötmaterial in den Lötspalt ein und füllt den Lötspalt im wesentlichen vollständig aus, wodurch eine von der flächenmäßigen Ausdehnung her gesehen genau definierte Lötverbindung zwischen Deck- und Bodenblech im gesamten Bereich des Lötspaltes entsteht.

Der Lötspalt ist definiert durch eine Spaltweite und eine Spaltbreite. Die Spaltweite ergibt sich aus dem Abstand der gegenüberliegenden Flächen von Deckblech und Bodenblech, definiert im wesentlichen durch die Dicke des Distanzstückes. Die Spaltbreite ergibt sich durch die Entfernung, in der eine zwischen Deckblech und Bodenblech angeordneten Begrenzungskante vom Rand entfernt angeordnet ist. Die Begrenzungskante kann auf verschiedene Weise erzeugt werden, bevorzugte

Wenn drei oder mehr Bleche verlötet werden, wird das mittlere Blech bzw. die mittleren Bleche etwas gegenüber dem Rand des Deckbleches zurückgeschnitten. Dadurch entsteht der Lötspalt ohne zusätzliche benötigte Distanzstücke, sondern entsteht durch einfache konstruktive Maßnahmen am Mittelblech. Die Spaltweite des Lötspaltes entspricht in etwa der Dicke des mittleren Bleches bzw. der Summe der Dicken der mittleren Bleche. Die hochfeste Verlötung der beiden äußeren Bleche bewirkt auch die feste Anbindung des Mittelbleches an die beiden äußeren Bleche. Damit können vorteilhaft drei und mehr Bleche miteinander verlötet werden. Insbesondere die Verbindung von vier Blechen oder mehr Blechen können mit der erfinderischen Maßnahme als hochfeste Fügung ausgeführt werden.

Ausführungen werden in den folgenden Ausgestaltungen der Erfindung beschrieben.

Vorteilhaft weist dabei der Lötspalt am Rand eine Spaltweite auf, die größer ist als das dünnere Blech und die kleiner ist als das dickere Blech der beiden zu verbindenden Bleche Deckblech und Bodenblech. Legt man die Dicken üblicher Bleche zugrunde, für die diese Art von Lötverbindung geeignet ist, kann die Spaltweite des Lötspaltes am Rand eine Spaltweite zwischen 0,2 mm und 5 mm betragen, wobei als bevorzugte Spaltweite ein Wert zwischen 0,5 mm bis 2 mm anzusehen ist. Ist die Spaltweite des Lötspaltes zu gering, ergeben sich die aus dem Stand der Technik bekannten Nachteile des unkontrollierten Lötmittelflusses. Ist die Spaltweite zu groß, ist der Lötmaterialverbrauch sehr groß, und der Lötspalt kann u. U. nicht vollständig mit Lötmaterial ausgefüllt werden, da das Lötmaterial, je nach Lage der Lötstelle, wegfließt. Diese Maße sind als Anhaltswerte zu verstehen. Bei Bedarf kann die Spaltweite des Lötspaltes auch davon abweichen, insbesondere zu größeren Spaltweiten als 5 mm hin.

Vorteilhaft weist der Lötspalt eine Spaltbreite, gemessen vom Rand des Deckbleches, zwischen 0,5 mm und 5 mm auf. Die Spaltbreite ergibt sich im wesentlichen durch die Anwendung der im folgenden beschriebenen Maßnahmen und ist dadurch gekennzeichnet, daß die Spaltweite des Lötspaltes abnimmt auf eine Spaltdicke, die sich durch den direkten Kontakt der Bleche bzw. weiterer Elemente ergibt. Durch die vorgegebenen Spaltbreite entsteht am Rand des Deckbleches ein direkte Lötverbindung von der Spaltbreite des Lötspaltes zwischen Deckblech und Bodenblech. Unbenommen ist natürlich ein größerer Lötmittelauftrag, so daß sich zusätzlich eine Kehlnaht der bekannten Art ausbildet, was zu einer weiteren Festigkeitssteigerung führt.

In einer anderen Ausführung wird der Lötspalt gebildet, indem Deckblech und/oder Bodenblech zumindest eine Eindrückung im Bereich des Randes aufweisen. Diese Eindrückung kann als Ausprägung in eines der Bleche eingepreßt sein oder als Absatz in einem der Bleche ausgeführt sein. Damit entsteht der Lötspalt bereits durch die Anordnung der beiden Bleche aufeinander, da die Eindrückung den Rand des Deckbleches auf einen definierten Abstand hält, der durch die Tiefe der Eindrückung bestimmt wird.

In einer weiteren Ausführung sind Eindrückungen in Deckblech und Bodenblech derart angeordnet, daß sie sowohl der Positionierung der Bleche selbst dienen als auch den Lötspalt erzeugen. Die Eindrückungen sind dazu zueinander passend in beide Bleche eingeprägt, wobei eine Eindrückung eine geringere Tiefe als die andere aufweist. Diese Eindrückungen können die Positionierung der Bleche aufeinander bestimmen und gleichzeitig durch ihre Gestaltung den Lötspalt bilden.

Bevorzugt bewirkt eine Eindrückung eine konstante Spaltweite des Lötspaltes zwischen Deckblech und Bodenblech, d. h. das im Lötspalt sich befindende Lötmaterial weist über die Spaltbreite des Lötspaltes eine konstante Dicke auf. Damit ist über die gesamte Spaltbreite des Lötspaltes eine kontinuierliche Kraftübertragung gewährleistet.

Bei einer weiteren bevorzugten Ausführung bewirkt eine Eindrückung eine zum Rand des Deckbleches zunehmende Spaltweite des Lötspaltes, d. h. das im Lötspalt befindliche Lötmaterial weist am Rand des Deckbleches eine größere Dicke auf als am dem Rand gegenüberliegenden Ende des Lötspaltes. Eine solche Anordnung kann sinnvoll sein, wenn das Lötmaterial sehr gleichmäßig in den Lötspalt fließen muß.

Gemäß der Erfindung ist der Rand des Deckbleches der Rand eines Ausschnittes im Deckblech, wobei der Ausschnitt vorwiegend ins Deckblech eingebracht ist, um die Verlötung mit dem Bodenblech durchzuführen. Dabei ist der Ausschnitt als Loch im Deckblech ausgeführt. Durch die Beschränkung der Lötverbindung auf den Bereich des Ausschnittes ist die Abmessung, d. h. die Ausdehnung der Lötverbindung genau festgelegt. Wenn der Ausschnitt ein Loch im Deckblech ist, wird bei der Lötung einfach das Loch mit Lötmaterial gefüllt. Durch den Lötspalt, der das Loch umfaßt, wird dann die genaue Ausdehnung der Lötverbindung zwischen Deckblech und Bodenblech festgelegt.

Verwendung findet die erfinderischen Lötverbindung nach einem der vorherigen Ansprüche vor allem bei der Verbindung von Karosseriebauteilen untereinander und/oder mit Beschlagteilen im Automobilbau. Prinzipiell sind jedoch alle Lötverbindungen auf diese Weise fertigbar, bei denen Dünnbleche, vorzugsweise zwischen 0,3 mm und 5 mm mittels Lötungen verbunden werden. Neben weiteren Anwendungen im Fahrzeugbau, z.B. Lötung von Fahrwerksteilen, können dies sein Anwendungen bei Haushaltsgeräten, Heizungs- und Lüftungseinrichtungen oder im Anlagenbau.

Die beschriebenen Anwendungen und Ausführungen können in sinnvoller Weise beliebig kombiniert werden. Insbesondere sind auch die Hinweise auf die Abmessungen nur als bevorzugte Ausführung zu verstehen. Je nach Anwendungsfall können auch größere oder kleinere Abmessungen des Lötspaltes und/oder der Blechdicken erforderlich sein. Es können auch mehrere Distanzstücke und/oder Mittelbleche pro Lötverbindung vorgesehen sein, je nach Anwendungsfall und Anforderung an die Konstruktion.

Vorteilhaft kann diese Lötverbindung insbesondere beim automatisierten Laserlöten eingesetzt werden. Neben den bereits beschriebenen obigen Vorteilen ergibt sich eine höhere Verarbeitungsgeschwindigkeit, da der Laserstrahl in den Lötspalt strahlen kann und damit die zu verbindenden Bleche schneller und zuverlässiger durch den Laserstrahl auf die für die Lötung benötigte Temperatur aufgeheizt als dies ohne Lötspalt der Fall wäre.

Weitere vorteilhafte Ausgestaltungen der Erfindung sind den Zeichnungen zu entnehmen. Es zeigen:
- Fig. 1: einen Querschnitt durch eine erfinderische Lötverbindung mit Zwischenblech in einem Ausschnitt des Deckbleches;
- Fig. 2: eine Draufsicht auf die erfinderische Lötverbindung aus Fig. 1;
- Fig. 3: einen Querschnitt durch eine erfinderische Lötverbindung mit Zwischenblech in einem Ausschnitt des Deckbleches und mit doppelter Lötnaht;
- Fig. 4: eine Draufsicht auf die erfinderische Lötverbindung aus Fig. 3;
- Fig. 5: einen Querschnitt durch eine Lötverbindung, die nicht im Gegenstand der Erfindung steht, mit einem Draht als Distanzstück;
- Fig. 6: einen Querschnitt durch eine erfinderische Lötverbindung mit Eindrückungen und einer Scheibe als Distanzblech;
- Fig. 7: einen Querschnitt durch eine Lötverbindung, die nicht im Gegenstand der Erfindung steht, mit einer Eindrückung in einem Lötflansch und einem Distanzstreifen; und
- Fig. 8: eine Teilansicht von Karosserieteilen, die mittels der erfinderischen Lötverbindung gefügt sind.

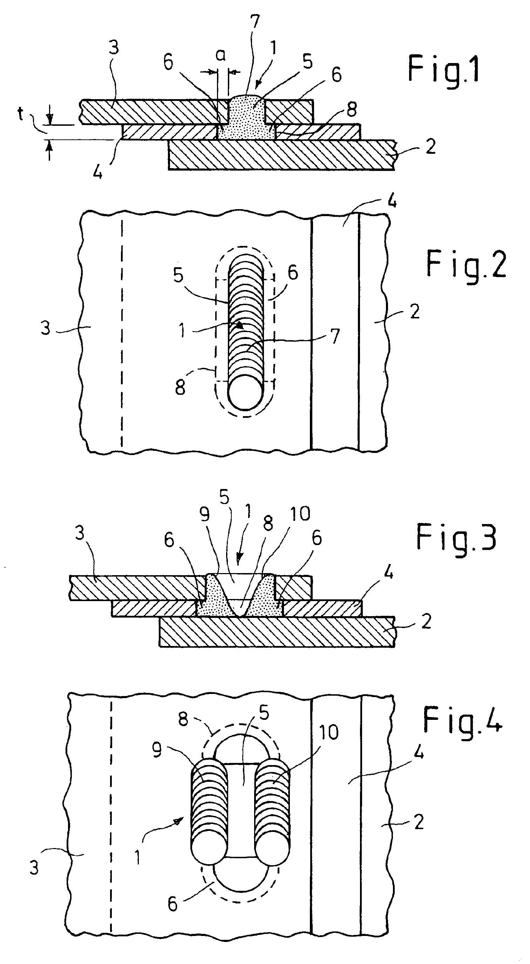

Fig. 1 und Fig. 2 zeigen eine erfinderische Lötverbindung 1, mittels derer ein Bodenblech 2, ein Deckblech 3 und ein Zwischenblech 4 in einem Ausschnitt 5 des Deckbleches 3 gefügt sind. Der Lötspalt 6 läuft um den Ausschnitt 5 herum und ist vollständig mit dem Lötmaterial der Lötnaht 7 gefüllt. Der Lötspalt 6 entsteht durch den gegenüber Ausschnitt 5 größere Ausschnitt 8 im Zwischenblech 4. Seine Spaltweite t entspricht der Dicke des Zwischenbleches 4, seine Spaltbreite a bestimmt sich aus den Differenzen der Abmessungen der Ausschnitte. Der Rand des Deckbleches 3 ist hier der Rand des Ausschnittes 5, d. h. dort wo die Lötverbindung 1 angeordnet ist.

In Fig. 3 und Fig. 4 ist eine erfinderische Lötverbindung 1 ähnlich wie bereits in Fig. 1 und 2 beschrieben. Einziger Unterschied ist, daß durch die größere Spaltbreite der Ausschnitte 5, 8 im Deckblech 3 und Zwischenblech 4 jetzt zwei Lötnähte 9 und 10 in den Ausschnitten 5, 8 eingebracht sind.

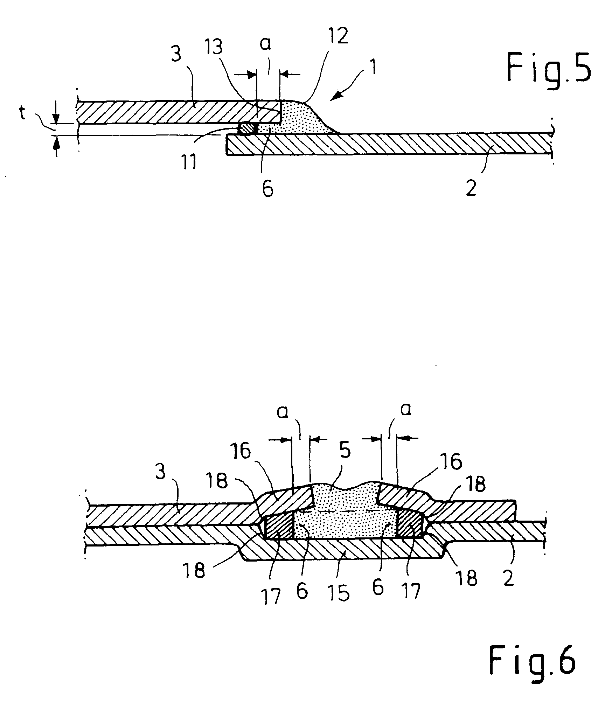

Fig. 5 zeigt eine Lötverbindung 1, die nicht im Gegenstand der Erfindung steht, bei dem zwischen Bodenblech 2 und Deckblech 3 ein Draht 11 als Distanzstück angeordnet ist. Die Spaltweite t des Lötspaltes 6 ist bestimmt durch die Dicke des Drahtes 11, die Spaltbreite a durch die Anordnung des Drahtes 11 in einem bestimmten Abstand vom Rand 13 des Deckbleches 3. Die Lötnaht 12 füllt den Lötspalt 6 aus und bedeckt auch den Rand 13 des Deckbleches 3.

In der Lötverbindung aus Fig. 6 weisen Bodenblech 2 und Deckblech 3 jeweils Eindrückungen 15, 16 im Bereich des Ausschnittes 5 auf. Zwischen den Blechen in Bereich der Eindrückungen 15, 16 ist eine gelochte Distanzscheibe 17 angeordnet. Werden Bodenblech 2 und Deckblech 3 gegeneinander gespannt, wird die Distanzscheibe 17 automatisch zwischen den Blechen positioniert. Neben der genauen Einstellung der Lötspaltweite hat dies den Effekt, daß die Breite a des Lötspaltes exakt eingestellt wird, und gleichzeitig werden auch die beiden Bleche 2, 3 zueinander exakt positioniert, da die Distanzscheibe 17 an den Rändern 18 der Eindrückungen 15, 16 anliegt.

Weiterhin ist gezeigt, wie die Eindrückung 16 eine zunehmende Spaltweite des Lötspaltes 6 bewirkt, indem die Eindrückung 16 konisch ausgeführt ist. Damit weist der Lötspalt 6 im Bereich des Ausschnittes 5 eine größere Weite auf als direkt neben der Distanzscheibe 17.

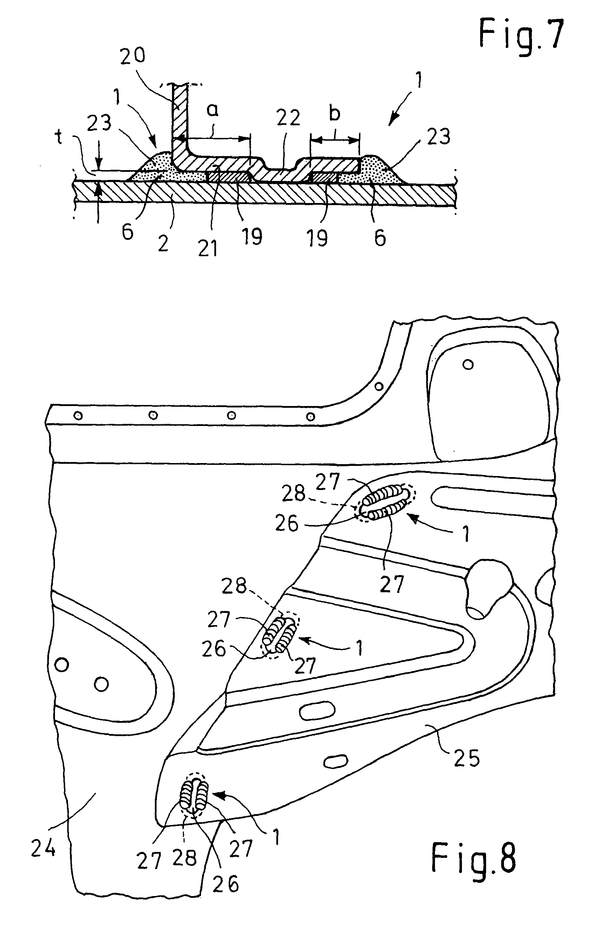

Fig. 7 zeigt eine Ausführungsform einer Lötverbindung 1, die nicht im Gegenstand der Erfindung steht, für ein Blech 20, das mittels eines Lötflansches 21 auf ein Bodenblech 2 gelötet ist, wobei der Lötflansch 21 die Funktion des vorher beschriebenen Deckbleches übernimmt.

Durch die Eindrückung 22 im Lötflansch 21 entsteht eine Positionierungshilfe für den Distanzstreifen 19 relativ zum Lötflansch 21. Es bilden sich zwei Lötspalte mit der Breite a und b und der Spaltweite t von der Dicke des Distanzstreifens 19. Mittels zweier Lötnähte 23 wird die Verbindung zwischen Lötflansch 21 und Bodenblech 2 hergestellt, wobei die Lötnähte 23 beidseitig des Lötflansches 21 verlaufen. Besonders vorteilhaft ist hier die großflächige direkte Verbindung zwischen Bodenblech 2 und Lötflansch 21 im Bereich der Lötspalte 6, wodurch die Lötverbindung 1 eine sehr hohe Kraftübertragung senkrecht zum Bodenblech 2 zuläßt.

In Fig. 8 ist eine Teilansicht einer Kraftfahrzeugkarosserie dargestellt, die mittels der erfinderischen gemäß der Figuren 1-4 und 6 beschrieben Lötverbindung 1 gefügt sind. Ein nicht dargestelltes Verstärkungsblech einer A-Säule ist mit dem Außenblech 25 eines oberen vorderen Längsträgers mittels der erfinderischen gemäß der Figuren 1-4 und 6 beschrieben Lötverbindungen 1 verbunden. Dazu weist das Außenblech 25 des Längsträgers drei Ausschnitte 26 auf, in denen jeweils doppelte Lötnähte 27 eingebracht sind. Die erfinderischen Lötspalte sind erzeugt, indem im Außenblech 24 der A-Säule Ausschnitte 28 ausgestanzt sind, die größer sind als die Ausschnitte 26 im Außenblech 25 des Längsträgers. Mittels der erfinderischen gemäß der Figuren 1-4 und 6 beschrieben Lötverbindung 1 können somit wesentlich höhere Kräfte zwischen den beiden hoch belasteten Karosserieteilen A-Säule und Längsträger übertragen werden.

## Patentansprüche

1. Lötverbindung (1) mit mehreren Blechen, mit zumindest einem oberen Deckblech (3) und einem unteren Bodenblech (2), wobei die Bleche im Bereich der Lötverbindung flach aufeinanderliegen, und wobei das Deckblech (3) einen Rand (13, 16) aufweist, entlang dem die Bleche mittels einer Lötnaht (12, 15) verbunden sind, und wobei im Bereich des Randes (13, 16) zwischen Deckblech (3) und Bodenblech (2) ein Lötspalt (6) angeordnet ist, der zumindest teilweise mit Lötmaterial aufgefüllt ist,
**dadurch gekennzeichnet, daß**
der Rand des Deckbleches (3) der Rand eines Ausschnittes (5) im Deckblech (3) ist und
der Lötspalt (6) gebildet wird, indem ein Distanzstück zwischen Deckblech (3) und Bodenblech (2) angeordnet ist, wobei der Rand des Distanzstückes gegenüber dem Rand (13) des Deckbleches (3) zurückgesetzt ist.

2. Lötverbindung nach Anspruch 1,
**dadurch gekennzeichnet, daß**
das Distanzstück ein Mittelblech (4) ist, welches zwischen Deckblech (3) und Bodenblech (2) angeordnet ist, wobei der Rand des Mittelbleches (4) gegenüber dem Rand des Deckbleches (3) zurückgesetzt ist.

3. Lötverbindung nach einem der vorherigen Ansprüche,
**dadurch gekennzeichnet, daß**
Deckblech (3) und/oder Bodenblech (2) zumindest eine Eindrückung (15, 16) im Bereich des Randes aufweisen.

4. Lötverbindung nach Anspruch 3,
**dadurch gekennzeichnet, daß**
Eindrückungen in Deckblech (3) und/oder Bodenblech (2) die Bleche zueinander positionieren.

5. Lötverbindung nach Anspruch 3 oder 4,
**dadurch gekennzeichnet, daß**
Eindrückungen (15, 16) in Deckblech (3) und/oder Bodenblech (2) das Distanzstück (17) relativ zu den Blechen positionieren.

6. Lötverbindung nach einem der Ansprüche 3 bis 5,
**dadurch gekennzeichnet, daß**
Eindrückungen (16) in Deckblech (3) und/oder Bodenblech (2) den Lötspalt (6) formen.

7. Lötverbindung einem der Ansprüche 3 bis 6,
**dadurch gekennzeichnet, daß**
eine Eindrückung (16) eine zum Rand des Deckbleches (3) zunehmende Spaltweite des Lötspaltes (6) bewirkt.

8. Lötverbindung nach einem der vorherigen Ansprüche,
**dadurch gekennzeichnet, daß**
der Lötspalt (6) am Rand eine Spaltweite t aufweist, die größer ist als das dünnere Blech und die kleiner ist als das dickere Blech der beiden zu verbindenden Bleche Deckblech (3) und Bodenblech (2).

9. Lötverbindung nach einem der vorherigen Ansprüche,
**dadurch gekennzeichnet, daß**
der Lötspalt (6) am Rand eine Spaltweite zwischen 0,2 mm und 5 mm aufweist.

10. Lötverbindung nach einem der vorherigen Ansprüche,
**dadurch gekennzeichnet, daß**
der Lötspalt (6) eine Spaltbreite, gemessen vom Rand des Deckbleches (3), aufweist zwischen 0,5 mm und 5 mm.

11. Verwendung einer Lötverbindung nach einem der vorherigen Ansprüche bei der Verbindung von Karosserieteilen im Automobilbau.

12. Verfahren, bei der eine Lötverbindung nach einem der vorherigen Ansprüche mittels einer Laserlötung gelötet wird.

## Claims

1. Soldering joint (1) comprising a plurality of metal sheets, with at least an upper top sheet (3) and a lower bottom sheet (2), the metal sheets lying flat one on top of the other in the region of the soldering joint, and the top sheet (3) having an edge (13, 16) along which the sheets are connected by means of a soldered seam (12, 15), and a soldering gap (6), which is at least partially filled with soldering material, being arranged in the region of the edge (13, 16) between the top sheet (3) and the bottom sheet (2), **characterized in that** the edge of the top sheet (3) is the edge of a cutout (5) in the top sheet (3) and the soldering gap (6) is formed by a spacer being arranged between the top sheet (3) and the bottom sheet (2), the edge of the spacer being set back with respect to the edge (13) of the top sheet (3).

2. Soldering joint according to Claim 1, **characterized in that** the spacer is a middle sheet (4), which is arranged between the top sheet (3) and the bottom sheet (2), the edge of the middle sheet (4) being set back with respect to the edge of the top sheet (3).

3. Soldering joint according to one of the preceding claims, **characterized in that** the top sheet (3) and/or the bottom sheet (2) have at least one impression (15, 16) in the region of the edge.

4. Soldering joint according to Claim 3, **characterized in that** impressions in the top sheet (3) and/or the bottom sheet (2) position the sheets in relation to one another.

5. Soldering joint according to Claim 3 or 4, **characterized in that** impressions (15, 16) in the top sheet (3) and/or the bottom sheet (2) position the spacer (17) in relation to the sheets.

6. Soldering joint according to one of Claims 3 to 5, **characterized in that** impressions (16) in the top sheet (3) and/or the bottom sheet (2) form the soldering gap (6).

7. Soldering joint according to one of Claims 3 to 6, **characterized in that** an impression (16) produces a gap width of the soldering gap (6) that increases towards the edge of the top sheet (3).

8. Soldering joint according to one of the preceding claims, **characterized in that** the soldering gap (6) has at the edge a gap width t which is greater than the thinner sheet and smaller than the thicker sheet of the two sheets to be connected, the top sheet (3) and the bottom sheet (2).

9. Soldering joint according to one of the preceding claims, **characterized in that** the soldering gap (6) has at the edge a gap width of between 0.2 mm and 5 mm.

10. Soldering joint according to one of the preceding claims, **characterized in that** the soldering gap (6) has a gap width, measured from the edge of the top sheet (3), of between 0.5 mm and 5 mm.

11. Use of a soldering joint according to one of the preceding claims in the connection of body parts in automobile construction.

12. Method in which a soldering joint according to one of the preceding claims is soldered by means of laser soldering.

## Revendications

1. Assemblage brasé (1) comprenant plusieurs tôles, avec au moins une tôle de recouvrement supérieure (3) et une tôle de base inférieure (2), les tôles étant superposées à plat dans la région de l'assemblage brasé, et la tôle de recouvrement (3) présentant un bord (13, 16) le long duquel les tôles sont connectées au moyen d'un joint de brasage (12, 15), une fente de brasage (6) étant prévue dans la région du bord (13, 16) entre la tôle de recouvrement (3) et la tôle de base (2), laquelle est remplie au moins en partie par le matériau de brasage,
**caractérisé en ce que**
le bord de la tôle de recouvrement (3) est le bord d'une section découpée (5) dans la tôle de recouvrement (3) et
la fente de brasage (6) est formée en disposant un élément d'espacement entre la tôle de recouvrement (3) et la tôle de base (2), le bord de l'élément d'espacement étant en retrait par rapport au bord (13) de la tôle de recouvrement (3).

2. Assemblage brasé selon la revendication 1, **caractérisé en ce que** l'élément d'espacement est une tôle centrale (4) qui est disposée entre la tôle de recouvrement (3) et la tôle de base (2), le bord de la tôle centrale (4) étant en retrait par rapport au bord de la tôle de recouvrement (3).

3. Assemblage brasé selon l'une quelconque des revendications précédentes,
**caractérisé en ce que**
la tôle de recouvrement (3) et/ou la tôle de base (2) présentent au moins une impression (15, 16) dans la région du bord.

4. Assemblage brasé selon la revendication 3,
**caractérisé en ce que** les impressions dans la tôle de recouvrement (3) et/ou la tôle de base (2) positionnent les tôles l'une par rapport à l'autre.

5. Assemblage brasé selon la revendication 3 ou 4,
**caractérisé en ce que**
les impressions (15, 16) dans la tôle de recouvrement (3) et/ou la tôle de base (2) positionnent l'élément d'espacement (17) par rapport aux tôles.

6. Assemblage brasé selon l'une quelconque des revendications 3 à 5,
**caractérisé en ce que** les impressions (16) dans la tôle de recouvrement (3) et/ou la tôle de base (2) forment la fente de brasage (6).

7. Assemblage brasé selon l'une quelconque des revendications 3 à 6,
**caractérisé en ce qu'**une impression (16) donne lieu à une largeur de fente de la fente de brasage (6) croissante vers le bord de la tôle de recouvrement (3).

8. Assemblage brasé selon l'une quelconque des revendications précédentes,
**caractérisé en ce que** la fente de brasage (6) présente au bord une largeur de fente t, qui est supérieure à la tôle plus mince et qui est inférieure à la tôle plus épaisse des deux tôles à connecter, la tôle de recouvrement (3) et la tôle de base (2).

9. Assemblage brasé selon l'une quelconque des revendications précédentes,
**caractérisé en ce que** la fente de brasage (6) présente au bord une largeur de fente comprise entre 0,2 mm et 5 mm.

10. Assemblage brasé selon l'une quelconque des revendications précédentes,
**caractérisé en ce que** la fente de brasage (6) présente une largeur de fente, mesurée depuis le bord de la tôle de recouvrement (3), comprise entre 0,5 mm et 5 mm.

11. Utilisation d'un assemblage brasé selon l'une quelconque des revendications précédentes, pour l'assemblage de pièces de carrosserie dans la construction automobile.

12. Procédé dans lequel un assemblage brasé selon l'une quelconque des revendications précédentes est brasé au moyen d'une brasure au laser.
